# EUROPEAN PATENT APPLICATION

(11) **EP 2 166 170 A1**
(43) Date of publication of application: **24.03.2010**
(21) Application number: 08394031.2
(22) Date of filing: 18.09.2008
(51) Int. Cl.: E04B 2/76, F16B 12/40

(54) **A modular furniture system**

(71) Applicant: Farrell Brothers Research Limited, Ardee, County Louth (IE)
(72) Inventor: Farrell, Paul, Ardee, Co. Louth (IE); Young, Colm, Swords, Co. Dublin (IE); Carson, Richard, Bath, BA2 6DE (GB)
(74) Representative: O'Brien, John Augustine

(57) **Abstract**

A clamping system for modular furniture comprises a support beam 1 and a clamp for mounting to the support beam 1. The support beam 1 is generally of light gauge metal and may for example be an extruded aluminium tube with a hollow interior 3. The beam I is of generally square shape in transverse cross section and has four projecting lobes 5, one at each corner. Concave portions 6 extend between each lobe 5. The clamp may comprise one, two, three or four identical clamping elements 10 for mounting to the beam 1. Each clamping element 10 has a single recess 12 of complementary shape to the lobe 5 so that the clamping element 10 can engage with and slidably move along the beam by engagement of the beam lobe 5 in the clamp recess 12. Each clamping element 10 comprises a single piece having a recess 12 of complementary shape to that of the lobe 5. In use, the clamping element recess 12 fully embraces the lobe 5 for securely mounting the clamp to the beam 1. The clamping element 10 fully embraces the lobe 5 so that accessories can be locked firmly to the support rail 1 without rotating, for example to hold accessories in a vertical or horizontal position relative to the support rail 1.

## Description

The invention relates to modular furniture and in particular to a clamping system used in modular furniture, especially office furniture.

Many modular office furniture systems are known. However, there are limitations on the range of furniture that can be assembled from known modular system. These limitations include at least some of the following:-
the need to use the worktop or screen elements to make the structure complete or to make the overall structure fully rigid;
the need to use the worktop or screen elements to attach accessories, thus the worktop cannot be easily removed for installation of cabling and for subsequent access to information technology equipment housed beneath the desk;
the need to adjust the length of desk legs to provide worktop height adjustment, thus disturbing the height datum of related screens and storage elements;
the need for the worktop to be sufficiently thick to resist bending under vertical load or for stiffening rails to be added beneath the worktop;
the need for the worktop to have multiple fixing positions for the attachment of the support structure in different configurations; and/or
the need to vary the size of worktops marginally to cope with variable desking configurations.

There is therefore a need for an improved modular furniture system.

### Statements of Invention

According to the invention there is provided a modular furniture system comprising:-
a support beam having a plurality of projecting lobes; and
a clamp for mounting to the support beam, the clamp comprising at least one clamping element;
the clamping element comprising a single piece having a recess of complementary shape to that of the lobe, the clamping element recess fully embracing the lobe for mounting the clamp to the beam.

In one embodiment the clamp comprises at least two clamping elements, the clamping elements being engagable with separate lobes of the support beam. The clamp may comprise two, three, or four clamping elements.

In one embodiment the system comprises fixing means for fixing the clamp elements together. The fixing means may extend between adjacent clamp elements.

In one embodiment the system comprises an end insert for the support beam. The insert may comprise a support for mounting another element to the insert. In one case the insert comprises a pair of insert parts which are adjustably mounted or mountable to one another. In one embodiment the insert comprises a clamp for mounting to another support beam. The insert may comprise a linking element for joining adjacent support beams.

In another embodiment the system comprises a support for a horizontal worktop or tabletop, the support comprising at least two spaced apart support beams and associated clamps. The system may comprise a support arm extending between the support beams. The support arm may be mounted to the support clamps of the support beams. In one case the support arm is height-adjustably mounted to the support clamps.

In another aspect the system comprises a vertical panel system comprising a support beam and at least two separate clamps which are longitudinally spaced-apart along the support beam, and a panel mounted to the spaced-apart clamps. The panel may comprise a power module. The panel may comprise grooves for mounting articles such as paper trays to the panel.

In a further aspect the system comprises a cable riser track system, the cable riser track system comprising at least two spaced-apart support beams and associated clamps, the clamps being mounted to uprights, the uprights defining therebetween a space for reception of cables. The cable-reception space may be defined by a cable enclosure. The cable enclosure may comprise an access closable by a closure such as a door.

In another embodiment the system comprises a cable track system, the cable track system comprising at least two spaced-apart support beams and associated clamps, and a cable track mounted to the clamps. The cable track may be releasably mounted to at least one of the clamps. The system may comprise clips which are mounted to the clamps, the cable tray being engagable with the clips. In one case at least part of the cable tray is flexible for mounting and demounting the tray.

In a further embodiment the system comprises a divider screen support system, the screen support system comprising at least two spaced - apart support beams and associated clamps, screen receivers being mounted to the spaced-apart clamps to receive a screen therebetween. The screen receivers may comprise receiver channels and fixings for fixing the screen in opposed channels.

In a still further embodiment the system comprises an overdesk support system, the overdesk support system comprising a support beam and associated clamps, and an overdesk support mounted to the clamps. The overdesk support may comprise a monitor support arm. The overdesk support may comprise a shelf-supporting bracket.

### Brief Description of the Drawings

The invention will be more clearly understood from the following description thereof given by way of example only with reference to the accompanying drawings, in which: -
Fig. 1 is an isometric view of a support beam according to the invention;
Fig. 2 is an enlarged end view of the support beam of Fig. 1;
Fig. 3 is a side elevational view of the support beam of Fig. 1;
Fig. 4 is an underneath plan view of the support beam of Fig. 1;
Fig. 5 is an isometric view of a clamping element for use with the beam of Figs. 1 to 4;
Fig. 6 is another isometric view of the clamping element of Fig. 5;
Fig. 7 is an end view of the clamping element;
Figs. 8 and 9 are elevational views of the clamping element;
Fig. 10 is an isometric view of an assembly comprising a single clamping element mounted to a support beam;
Fig. 11 is a view similar to Fig. 10 with the clamping element in an alternative orientation;
Fig. 12 is an end view of the assembly of Figs. 10 or 11;
Fig. 13(a) is an exploded isometric view of an assembly comprising a pair of clamping elements mounted to a support beam;
Fig. 13(b) is an end view of the assembly of Fig. 13(a);
Fig. 13(c) is an exploded isometric view of another assembly comprising a pair of clamping elements mounted to a support beam;
Fig. 13(d) is an end view of the assembly of Fig. 13(c);
Fig. 14(a) is an exploded isometric view of a typical assembly comprising three clamping elements mounted to a support beam;
Fig. 14(b) is an end view of the assembly of Fig. 14(a).
Fig. 15(a) is an exploded isometric view of a typical assembly comprising four clamping elements mounted to a support beam;
Fig. 15(b) is an end view of the assembly of Fig. 15(a);
Fig. 16 is an isometric view of a pair of clamping elements with an accessory holder mounted thereto;
Fig. 17 is an isometric view of a pair of clamping elements with a power unit marked thereto;
Fig. 18 is a perspective view of a pair of clamping elements forming a centre screen clamp;
Fig. 19 is a perspective view of a pair of clamping elements with a panel support mounted thereto;
Fig. 20 is a perspective view of a pair of clamping elements with an extra screen modular clamp;
Fig. 21 is a perspective view of clamping elements with a height adjustable support rail mounted thereto;
Figs. 22 to 24 are elevational views of the support rail and clamp of Fig. 21 in different configurations of use;
Fig. 25 is an exploded perspective view of an end insert for the support beam;
Fig. 26 is an end view of the assembled end insert of Fig. 25;
Figs. 27 and 28 are elevational views of the end insert of Figs. 25 and 26;
Fig. 29 is an isometric view of an assembly of the end insert of Figs. 25 to 28 inserted into a beam and an end frame;
Fig. 30 is a cross sectional view of the assembly of Fig. 29;
Fig. 31 is an enlarged cross sectional view of detail A of Fig. 30
Fig. 32 is an exploded perspective view of a post link unit for use with the support beam;
Fig. 33 is an end view of the assembled post link unit;
Figs. 34 and 35 are elevational views of the assembled post link unit of Figs. 32 and 33;
Fig. 36 is an isometric view of an assembly of a post and a support beam with the post link unit of Figs. 32 to 35;
Fig. 37 is a cross sectional view of the assembly of Fig. 36;
Fig. 38 is an enlarged cross sectional view of detail A of Fig. 37;
Fig. 39 is an exploded perspective view of a beam to beam link unit;
Fig. 40 is a side elevational view of the assembled beam to beam link unit;
Figs. 41 and 42 are end views of the beam to beam link unit of Figs. 39 and 40;
Fig. 43 is an underneath plan view of the assembled beam to beam link unit;
Fig. 44 is an isometric view of an assembly of a beam link unit of Figs. 39 to 43 and two beams;
Fig. 45 is a cross sectional view of the assembly of Fig. 44;
Fig. 46 is an enlarged cross sectional view of detail A of Fig. 45;
Fig. 47 is an exploded perspective view of a shared end frame link unit;
Fig. 48 is a side elevational view of the assembled shared end frame link unit;
Fig. 49 is an end view of the assembled shared end frame link unit;
Fig. 50 is an underneath plan view of the assembled shared end frame link unit;
Fig. 51 is an isometric view of an assembly of a link unit and adjacent frames;
Fig. 52 is an end view of the assembly of Fig. 51;
Fig. 53 is a cross sectional view of a joint detail of the assembly of Fig. 51;
Fig. 54 is an enlarged cross sectional view of detail A of Fig. 53;
Fig. 55 is an exploded view of detail B of Fig. 51;
Fig. 56 is an isometric view of a typical furniture unit assembled using the clamping system of the invention;
Figs. 57 to 59 are respectively elevational, top plan, and end views of the furniture unit of Fig. 56;
Figs. 60 to 66 are views of various end frame units which may be utilised in the invention;
Fig. 67 is an isometric view of a height adjustable worktop system;
Fig. 68 is an elevational view of the worktop system of Fig. 67;
Fig. 69 is an isometric view of one section of a non-height adjustable worktop system;
Fig. 70 is an isometric view of another section of a non-height adjustable worktop system;
Fig. 71 is an elevational view of a non-height adjustable worktop system;
Fig. 72 is an isometric view of a section of a meeting table system;
Fig. 73 is an isometric view of another section of a meeting table system;
Fig. 74 is an elevational view of a meeting table system;
Fig. 75 is an isometric view of a power module system;
Fig. 76 is an isometric view of a paper tray holder system;
Fig. 77 is an end view of power module or tray holder system;
Fig. 78 is an isometric view of a cable riser system;
Fig. 79 is an elevational view of the cable riser system;
Fig. 80 is an isometric view of a cable tray system;
Fig. 81 is an elevational view of one cable tray system;
Fig. 82 is an elevational view of another cable tray system;
Fig. 83 is an elevational view of a further cable tray system;
Fig. 84 is an isometric view of a divider screen system;
Fig. 85 is an end view of the divider screen system;
Fig. 86 is an isometric view of a monitor arm support system;
Fig. 87 is an elevational view of the monitor arm support system;
Fig. 88 is an elevational view of an over-desk shelf system;
Fig. 89 is an isometric view of a single desk screen system;
Fig. 90 is an end view of one desk screen system;
Fig. 91 is an end view of another desk screen system;
Fig. 92 is an isometric view of a lower panel or modesty panel system; and
Fig. 93 is an end view of the panel system.

### Detailed Description

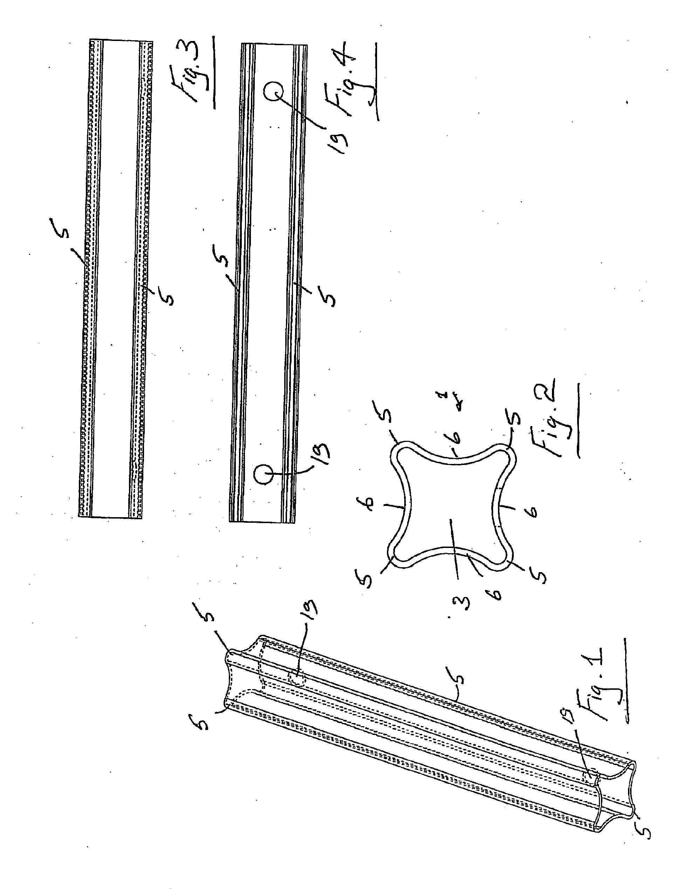

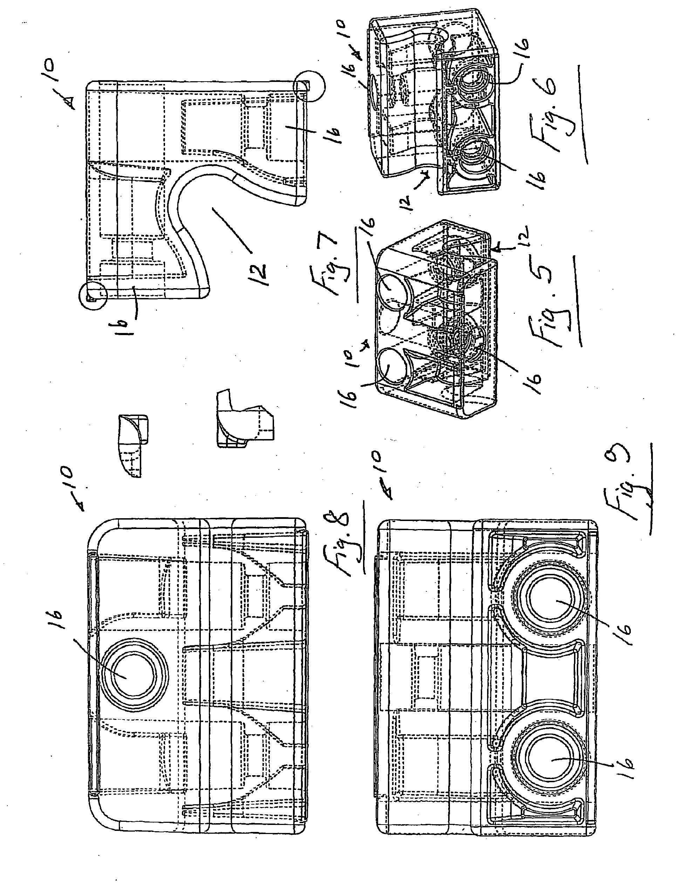

Referring to the drawings and initially to Figs. 1 to 15 thereof there is illustrated a clamping system for modular furniture according to the invention. The clamping system comprises a support beam 1 and a clamp for mounting to the support beam 1.

The support beam 1 is generally of light gauge metal and may for example be an extruded aluminium tube with a hollow interior 3. The beam 1 is of generally square shape in transverse cross section and has four projecting lobes 5, one at each corner. Concave portions 6 extend between each lobe 5. The clamp may comprise one, two, three or four identical clamping elements 10 for mounting to the beam 1. Each clamping element 10 has a single recess 12 of complementary shape to the lobe 5 so that the clamping element 10 can engage with and slidably move along the beam by engagement of the beam lobe 5 in the clamp recess 12. Each clamping element 10 comprises a single piece having a recess 12 of complementary shape to that of the lobe 5. In use, the clamping element recess 12 fully embraces the lobe 5 for securely mounting the clamp to the beam 1.

The clamping element 10 fully embraces the lobe 5 so that accessories can be locked firmly to the support rail 1 without rotating, for example to hold accessories in a vertical or horizontal position relative to the support rail 1.

The support rail 1 shape is instrinsically strong to resist bending and twisting loads, thus minimising its size and wall thickness.

The entire desk structure is fixed to the support rail 1, therefore the complete metal structure can be pre-assembled without worktops or screens enabling clear access for the installation of cabling and under-desk information technology equipment. Worktops and screens can therefore be added when there is less risk of damage.

The height of the support rail 1 relative to the floor is constant, providing a consistent datum. Screens are fixed to the support rails 1 also worktops at variable heights: when floor standing storage or floor standing screens are added, their overall heights remain consistent with the desk-mounted screens.

Worktop sizes and fixing positions are consistent whatever the desking configuration: there is no need to multiple fixing positions therefore specification and assembly is simplified.

Each clamping element 10 also has holes 16 for fixing the clamping element to the beam lobe 5 and/or another clamping element. In this case the holes 16 are screw threaded for engagement with a fixing such as a bolt 20 extending between adjacent clamping elements. The clamping elements have threaded holes 17 for receiving fixing screws 18 which may be used to attach other elements 15 to the clamp 10. The beam also has access holes 19 in the base thereof to facilitate hidden fixing/adjustment.

Clamping elements 10 are used at least in sets of two. They can perform more than one function, where positions of different accessories can be coincident, for example a pair of clamping elements 10 can fix one accessory to the support rail 1 and a third or fourth clamping element 10 can be fixed to the first or second clamping element 10 to provide a firm location. Therefore in one position along the length of the support rail 1 there could be two, three or four clamping elements 10 performing one, two, three or more functions from the same overall clamping assembly.

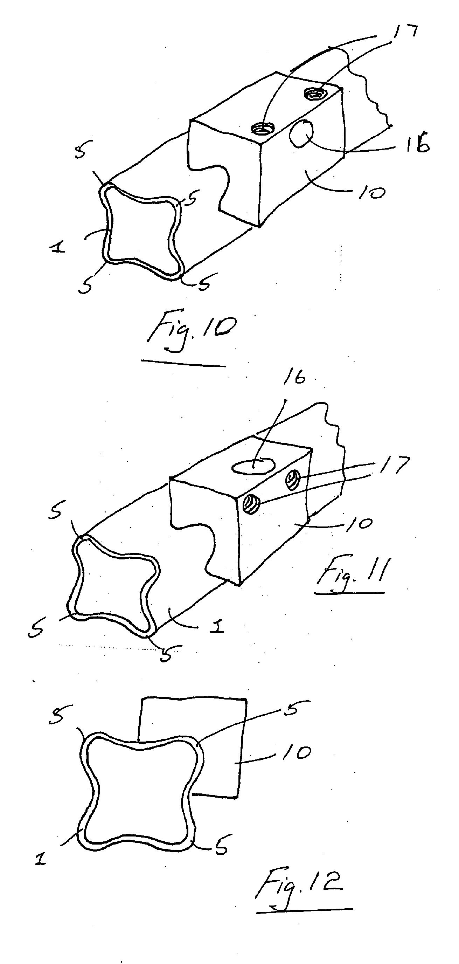

Figs. 10 to 15 illustrate the mounting of the clamping elements 10 to a beam 1. There may be a number of clamping elements(s) 10 mounted to the beam 1.

Figs. 10 to 12 illustrate a single clamping element 10 associated with a beam 1. The clamping element 10 may be mounted to a lobe 5 of the in one of two orientations (Figs. 10 and 11).

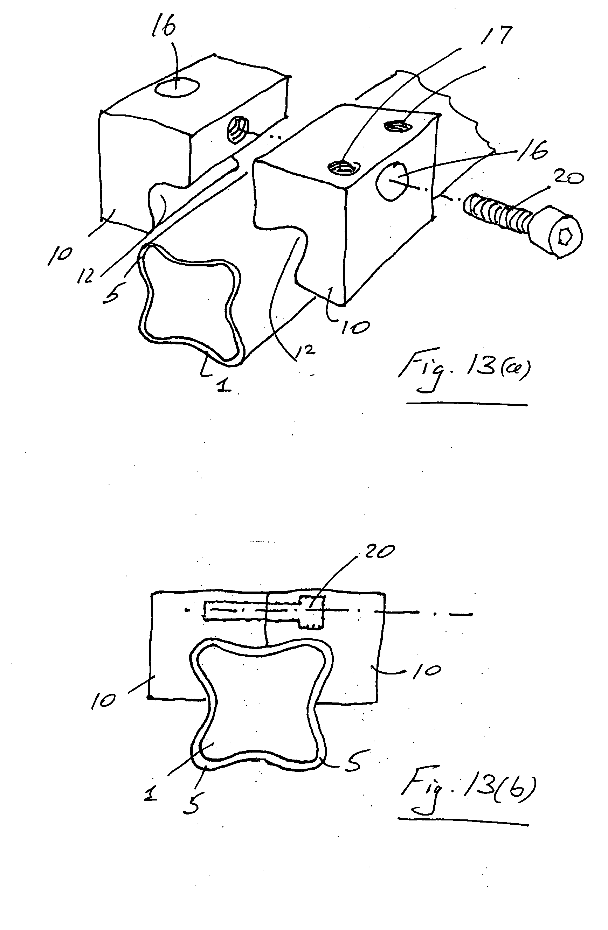

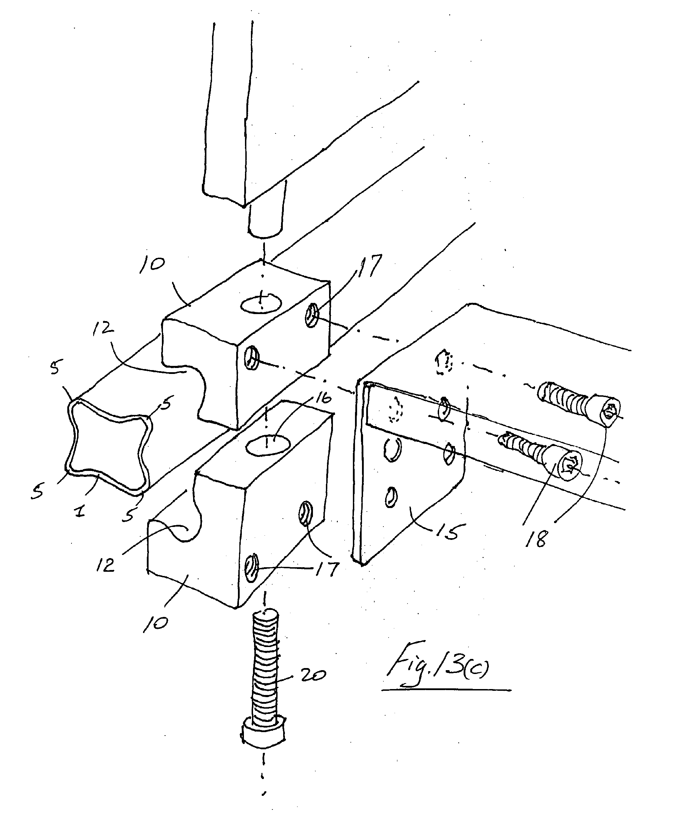

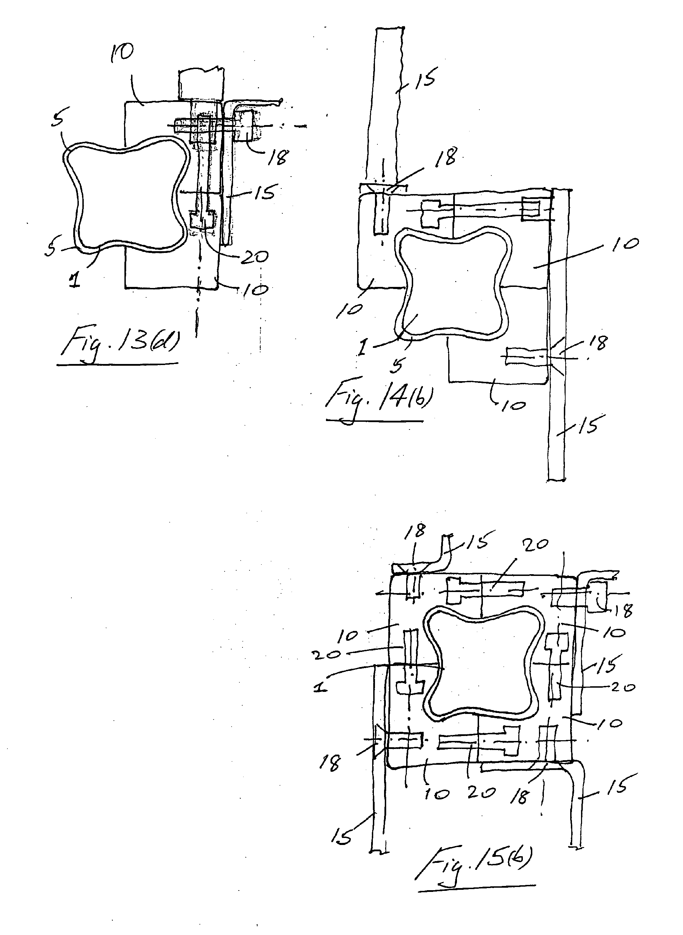

Fig. 13(a) and 13(b) illustrate two clamping elements 10 mounted to the beam 1. The clamping elements 10 are fixed to the beam 1 using a fixing screw 20 as illustrated. In Figs. 13(c) and 13(d) there are two clamping elements 10 which are arranged in a different configuration to provide four fixing holes 17 (two from each clamp 10) for mounting another element 15 using fixing screws 18.

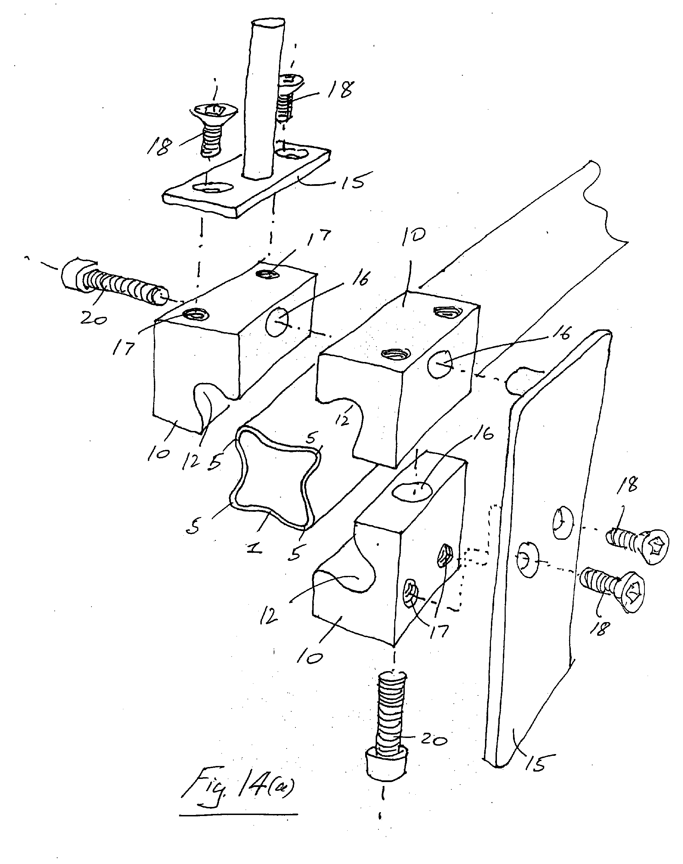

Referring to Figs. 14(a) and 14(b) there is illustrated a support beam 1 with three clamping elements 10 mounted thereto. The arrangement provides an assembly to which a range of other elements can be mounted.

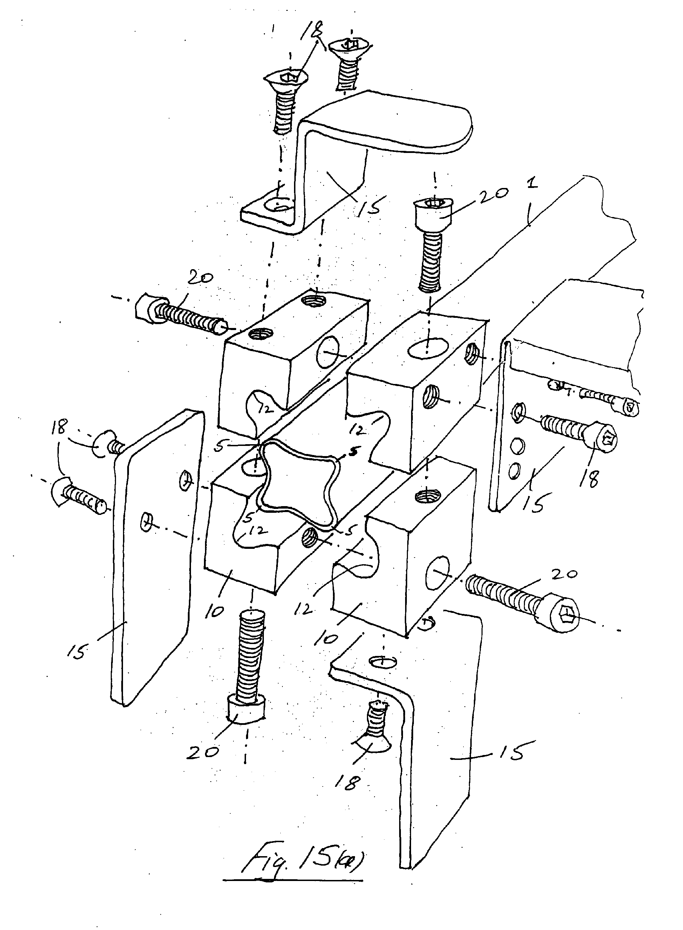

Figs. 15(a) and 15(b) illustrate a support beam 1 with four clamping elements 10 mounted thereto. A wide range of other elements 15 can be readily mounted to the assembly using fixing screws 18.

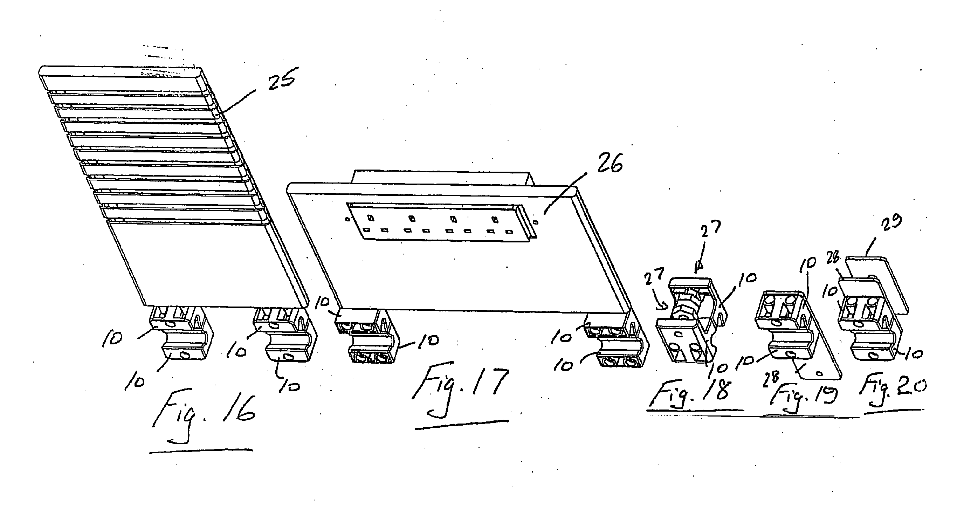

The clamping elements 10 may be used to mount a wide range of accessories such as those illustrated in Figs. 16 to 20.

Fig. 16 shows an accessory holder 25 mounted to pairs of clamping elements 10 which in turn can be marked in any desired position on a support beam 1.

Fig. 17 shows a power socket unit 26 mounted to pairs of clamping elements 10 which in turn can be mounted in any desired position on a support beam I.

Fig. 18 illustrates a pair of clamping elements 10 with attachments 2 for mounting a screen therebetween.

Fig. 19 shows a pair of clamping elements 10 with a panel support 28 marked thereto.

Referring to Fig. 20 there is illustrated a pair of clamping elements 10 with an extra screen modular clamp 28, 29.

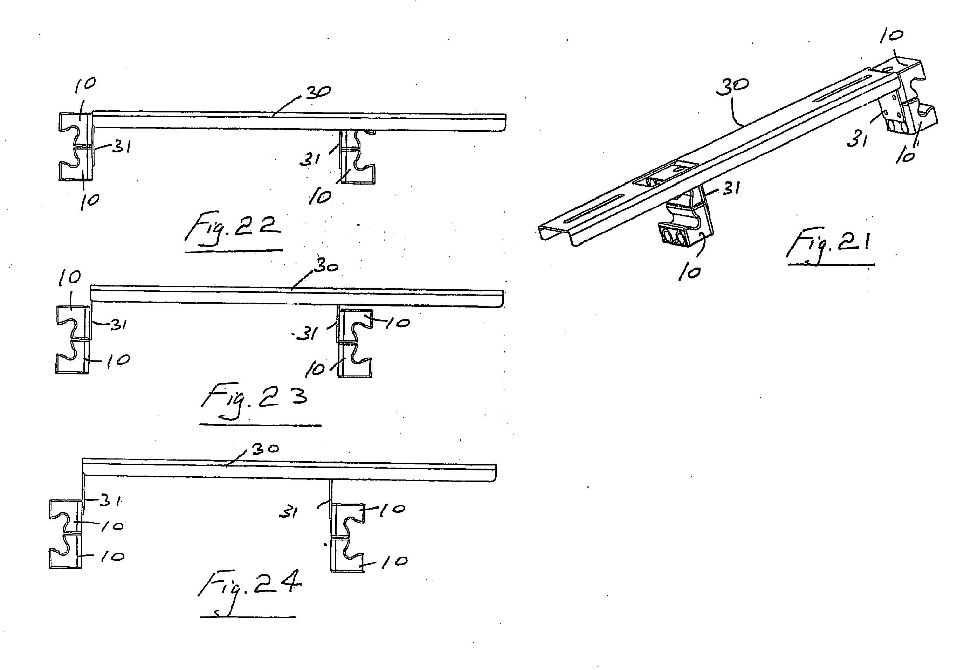

Referring to Fig. 21 there is illustrated a top support rail 30 mounted to spaced-apart pairs of clamping elements 10. The rail has depending legs 31 which can be mounted to the clamping elements in a number of different positions to adjust the height of the support rail 30 above the clamping elements as illustrated in Figs. 22 to 24. Again the clamping elements can be mounted to the support beams 1 at any desired location.

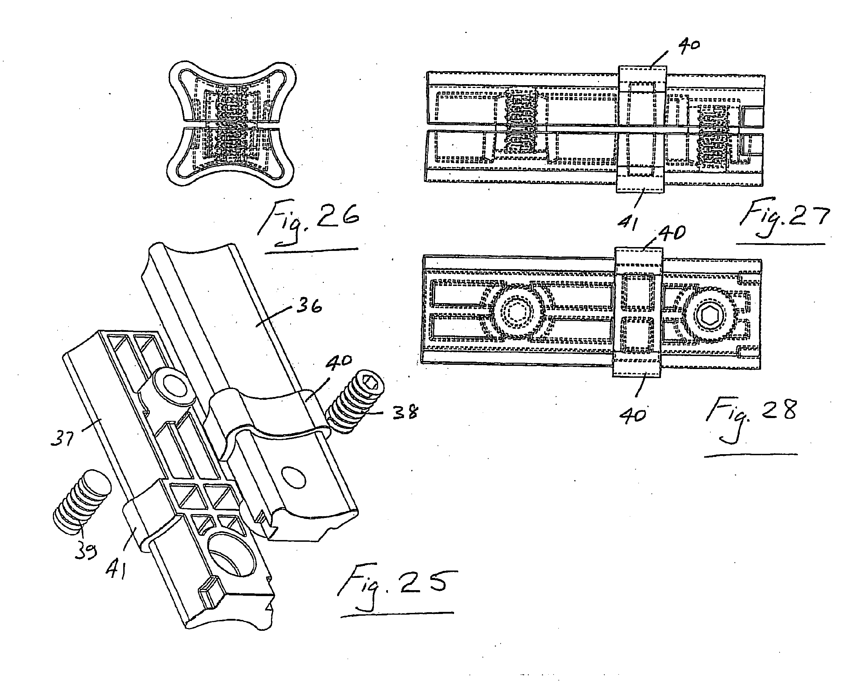

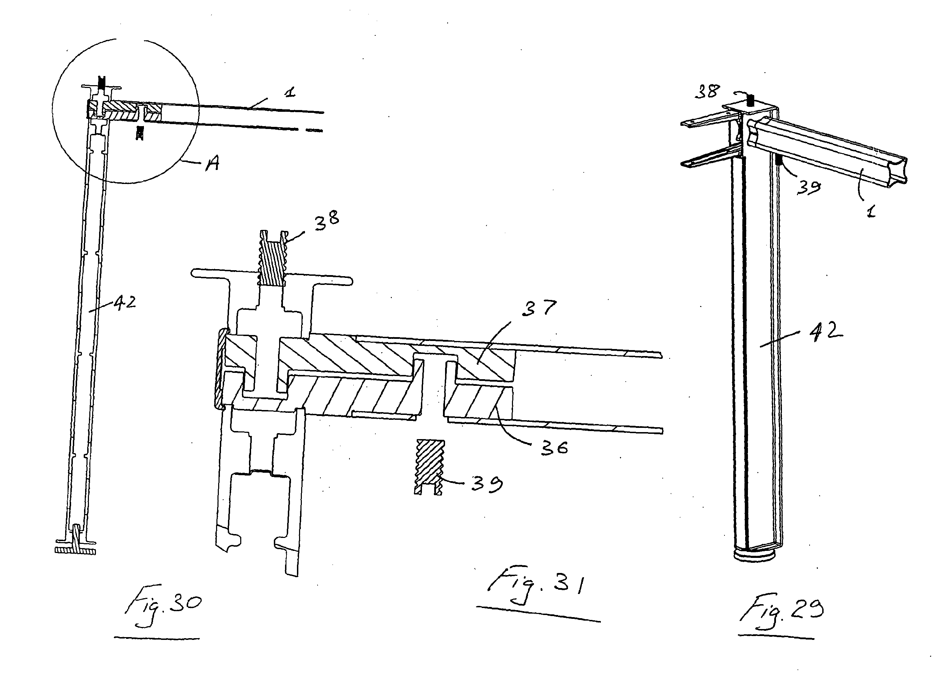

Figs. 25 to 28 illustrate an end insert 35 for a support beam 1 which may be used for example, for joining two beams 1 end to end. The end insert 35 comprises an end frame top element 36 and an end frame bottom element 37 which are fixed together by means of grub screws 38, 39. The insert ends 36, 37 are sized and shaped to slide into the open hollow ends of a beam 1. Each of the elements 36, 37 is formed with a raised land 40, 41 respectively which forms end stops for limiting the insertion of the insert into adjacent beams 1. Figs. 29 to 31 illustrate an assembly of the end insert 35 inserted into.a beam I and an end frame 42. Access for grub screws 38, 39 to expand the elements 36, 37 is illustrated.

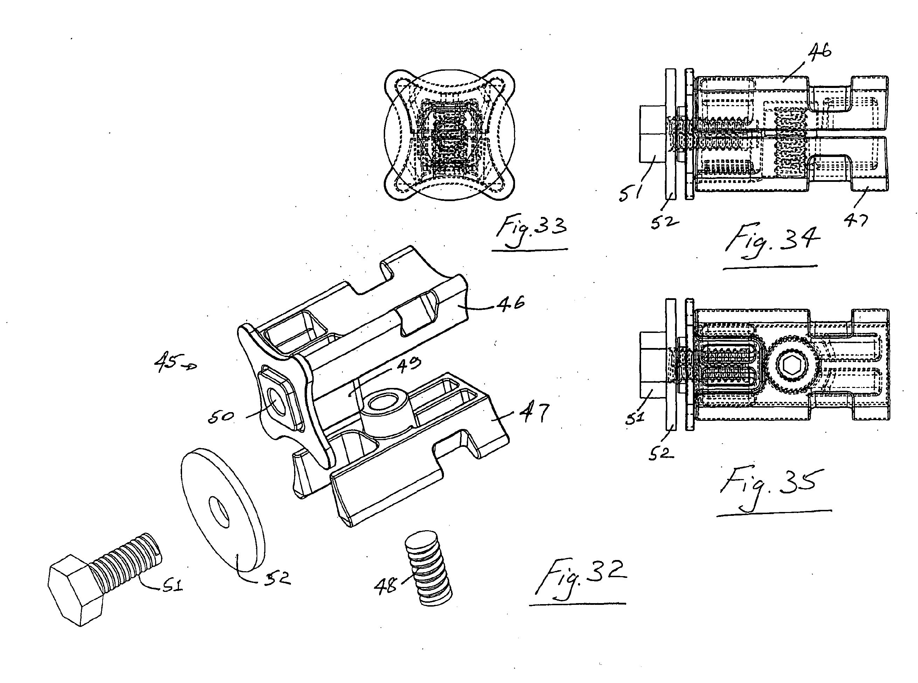

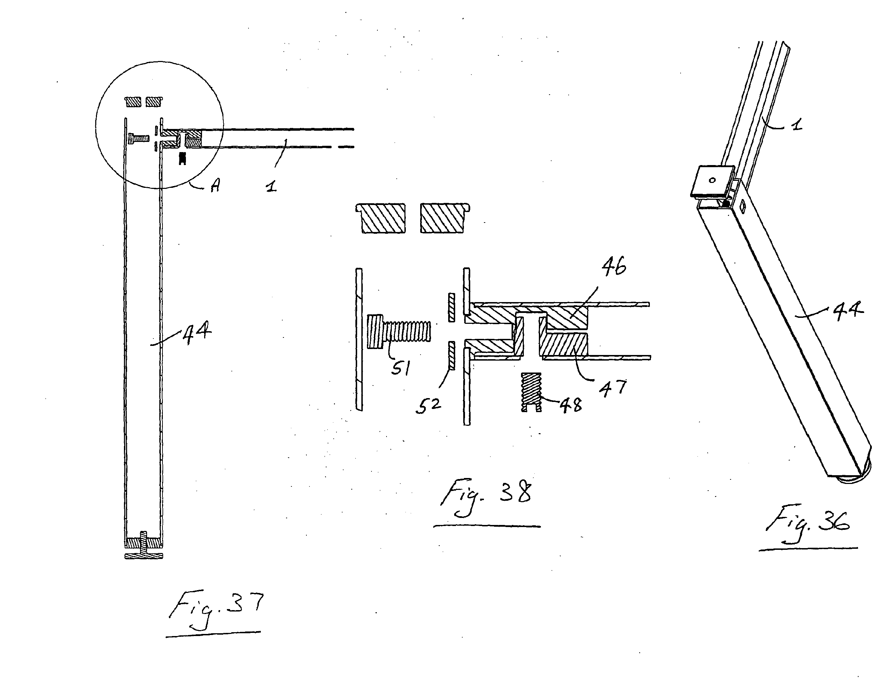

Referring now to Figs. 32 to 38 there is illustrated a post link unit 45 for use with a support beam I and a post 44. The link unit 45 comprises a top element 46 and a bottom element 47 which are fixed together with a grub screw 48. The top element 46 has a depending block 49 with a threaded hole 50 to receive a fixing bolt 51. A washer 52 is also used on the bolt 51.

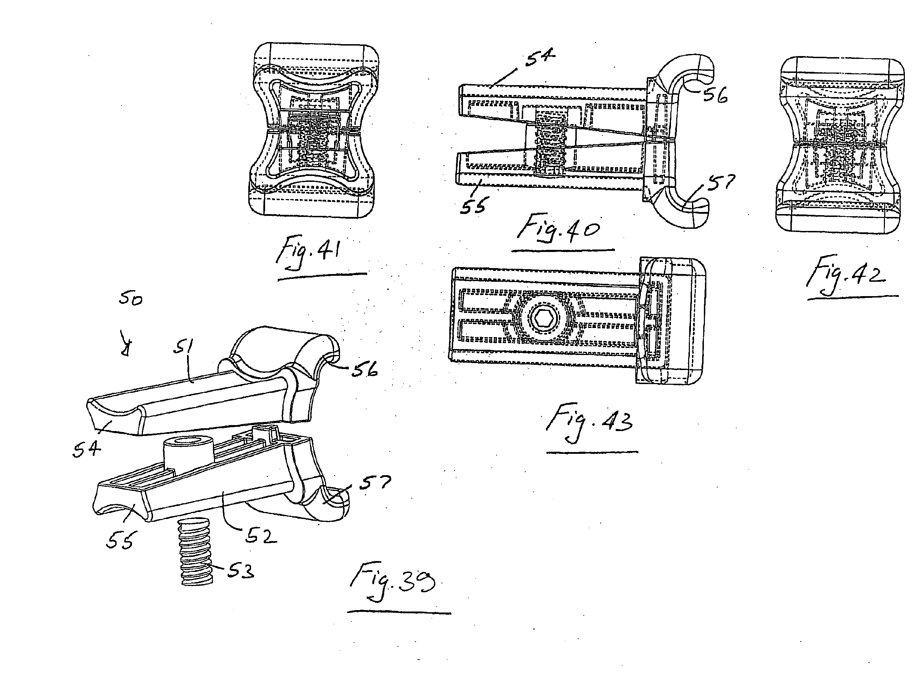

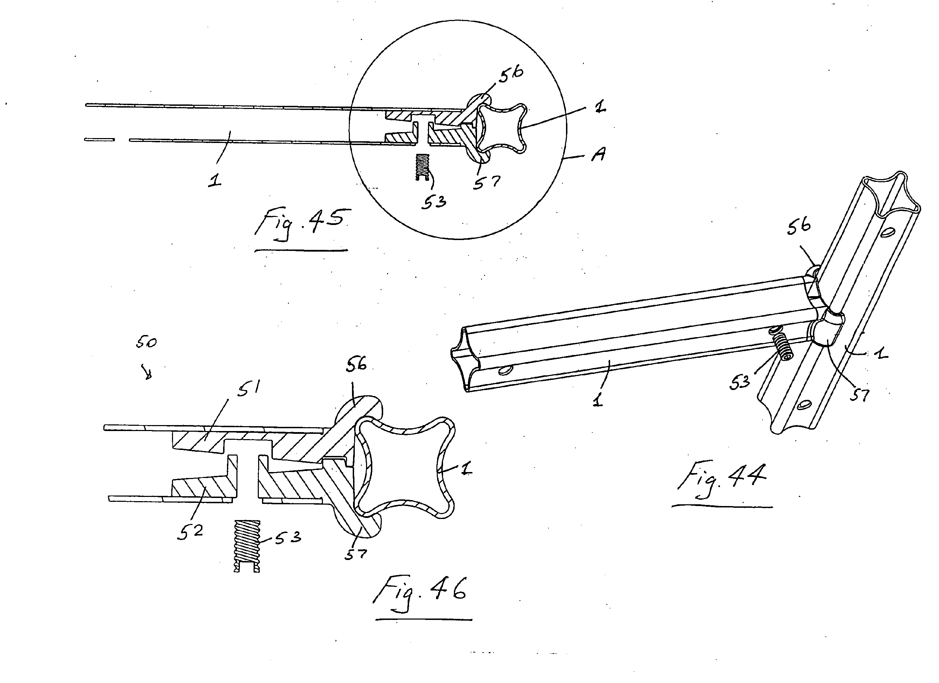

Referring to Figs 39 to 46 there is illustrated a beam to beam link unit 50 comprising a top link element 51 and a bottom link element 52. A grub screw 53 is used to fix the link unit 50 in situ. The link elements 51, 52 each have a section 54, 55 respectively for insertion and engagement in the open end of one beam 1 and a head part 56, 57 which embrace two lobes 5 of another beam 1. In this way an upright beam I can be readily jointed with a horizontal support beam 1. Thus, two adjacent support rails 1 can be joined at right angles to each other.

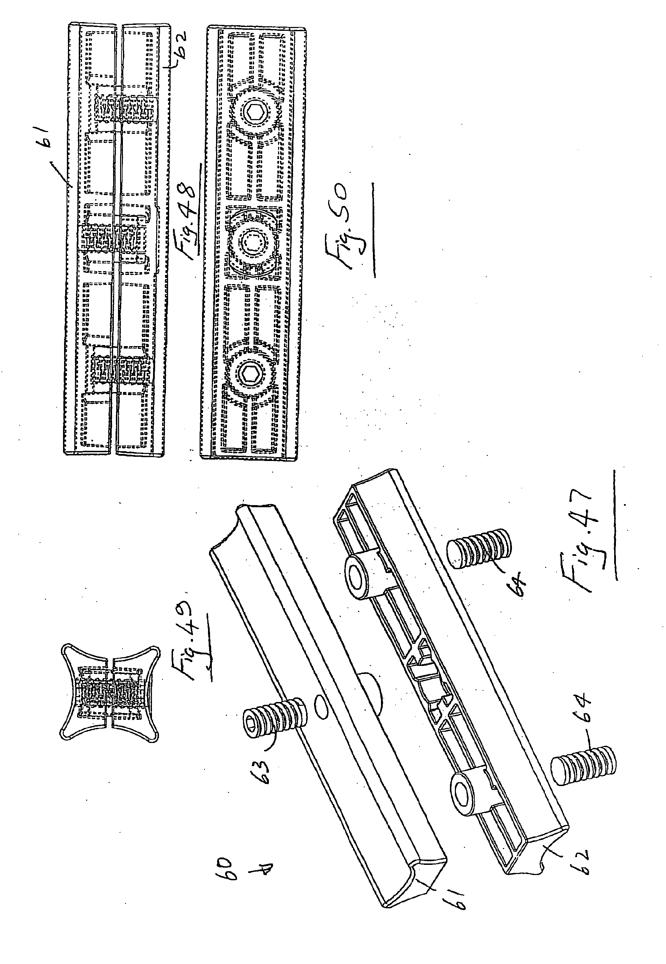

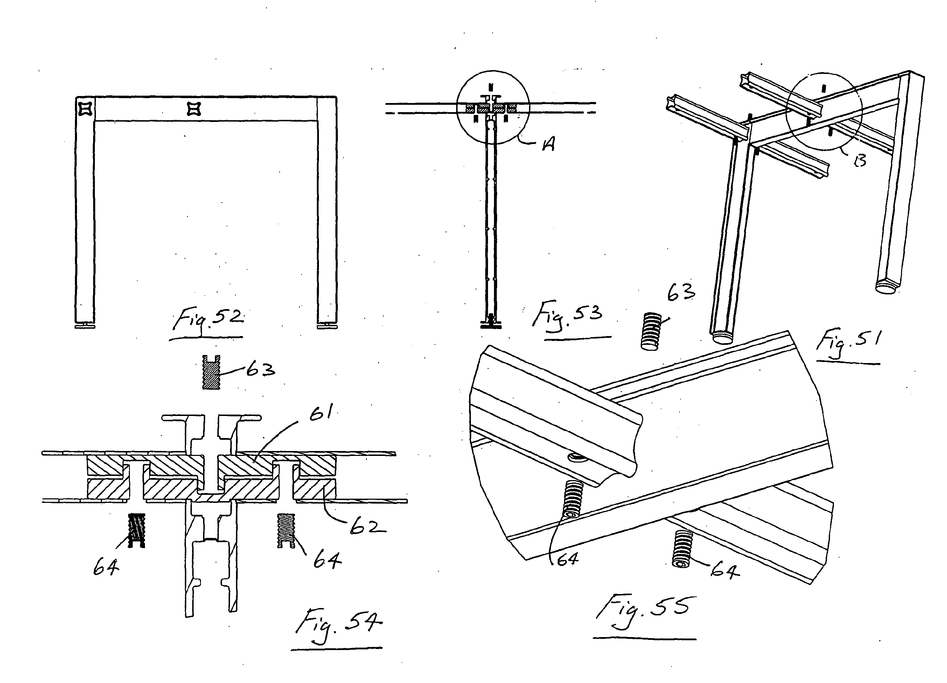

Referring to Figs. 47 to 55 there is illustrated a shared end frame link unit 60 which enables two support rails end to end to attach to a desk end frame. The end frame can therefore be shared between two adjacent desks. The shared endframe link unit 60 comprises a top link element 61 and a bottom link element 62 which are joined together by grub screws 63, 64.

The various elements described above can be used to assemble a very wide range of furniture systems.

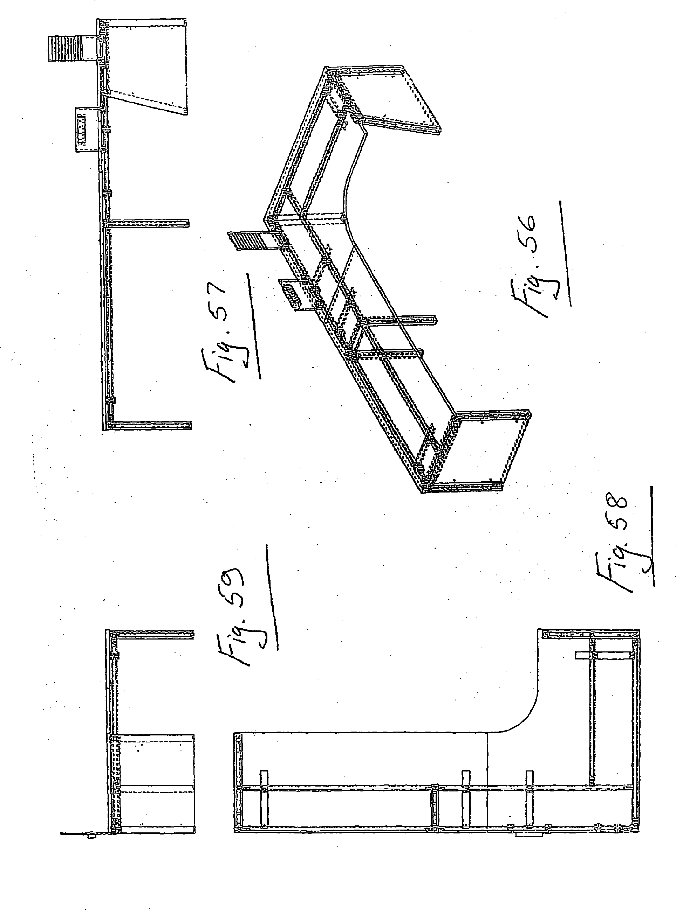

One such furniture system 70 is illustrated in Figs. 56 to 59.

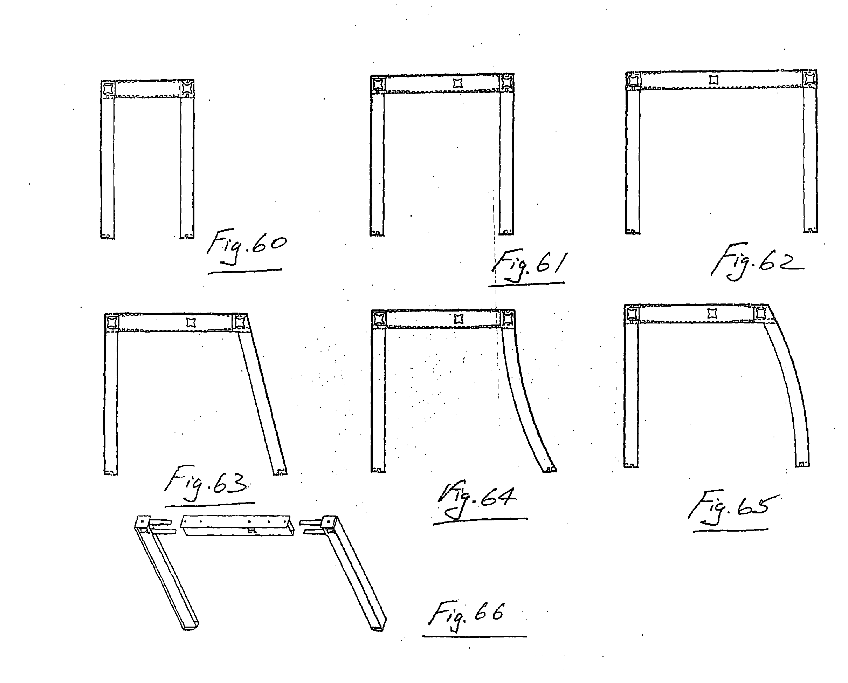

Figs. 60 to 66 are views of various end frames that may be assembled using the connection system described above. The end frames may have varying length and shape.

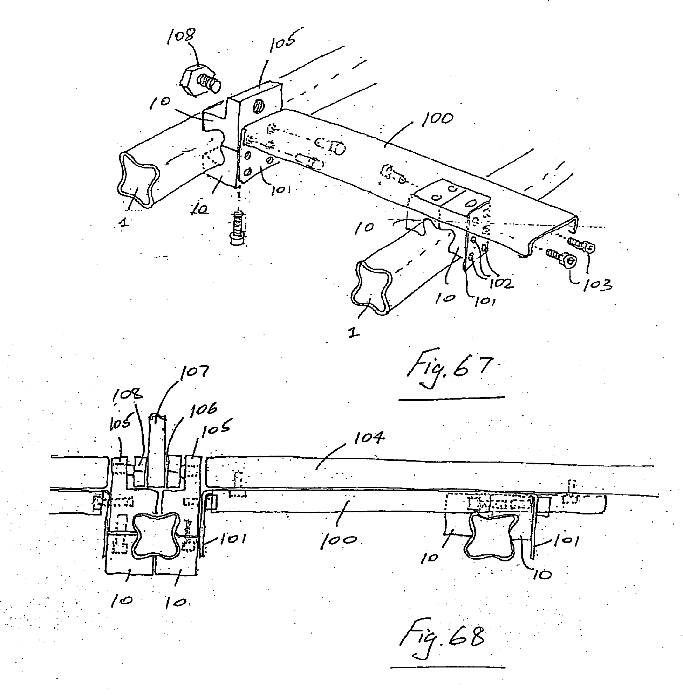

Referring to Figs. 67 to 71 there are illustrated various worktop or tabletop support systems. The support systems comprise at least two spaced-apart support beams I and associated clamping elements 10. A support arm 100 extends between the support beams I and is mounted to the associated clamping elements 10. In the arrangement of Figs. 67 to 68 the support arm 100 is height adjustably mounted to the clamping elements 10 using mountings 101 with a plurality of mounting holes 102 through which fixing screws 103 may be engaged, depending on the desired height for a worktop 104. Some of the clamping elements 10 may have extensions 105 to define a slot 106 to receive a screen 107 which may be held in place by clamping screws 108.

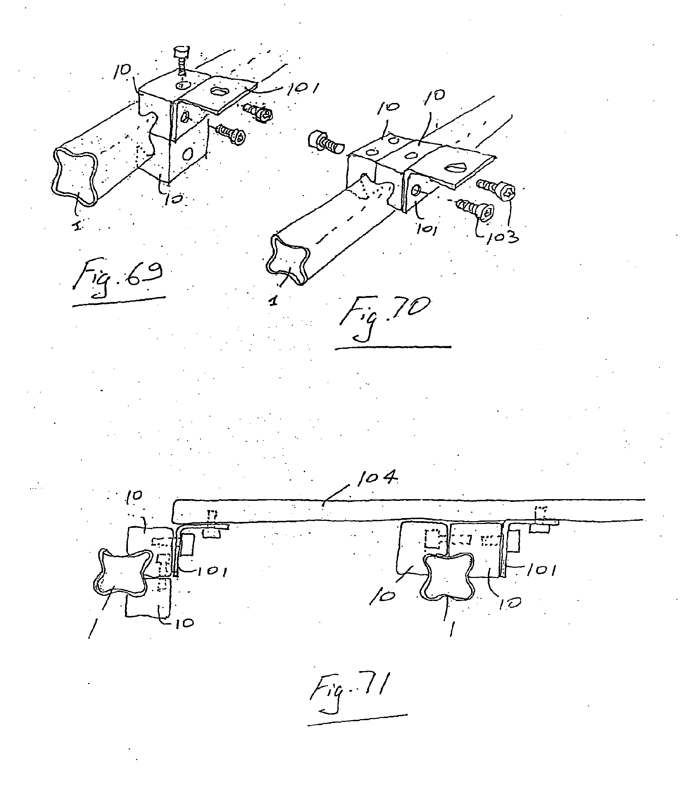

The arrangement of Figs. 69 to 71 is similar to that of Figs. 67 to 68 except that the worktop height is not adjustable in this case.

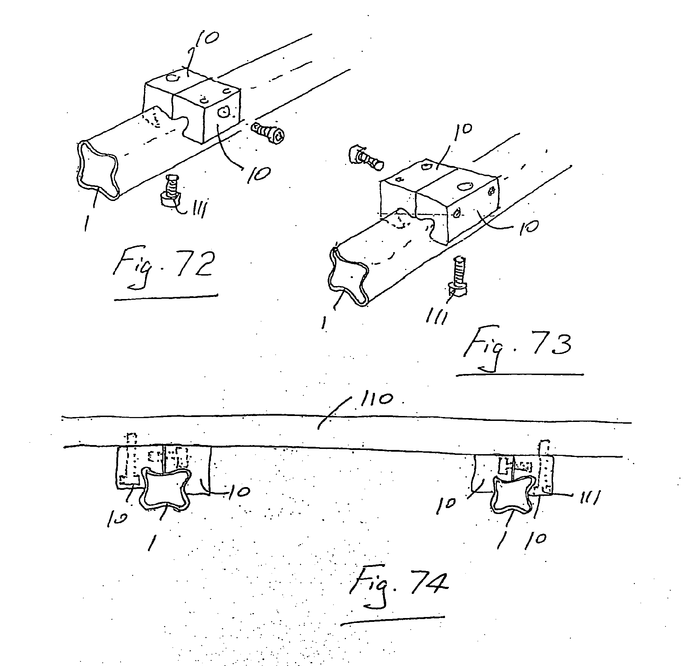

A meeting table system is illustrated in Figs. 73 to 74 and again comprises a pair of spaced-apart support beams 1 and associated clamping elements 10. A worktop or tabletop 110 is mounted on the clamping elements 10 and is clamped in place by fixings 111 which extend through some of the clamping elements 10.

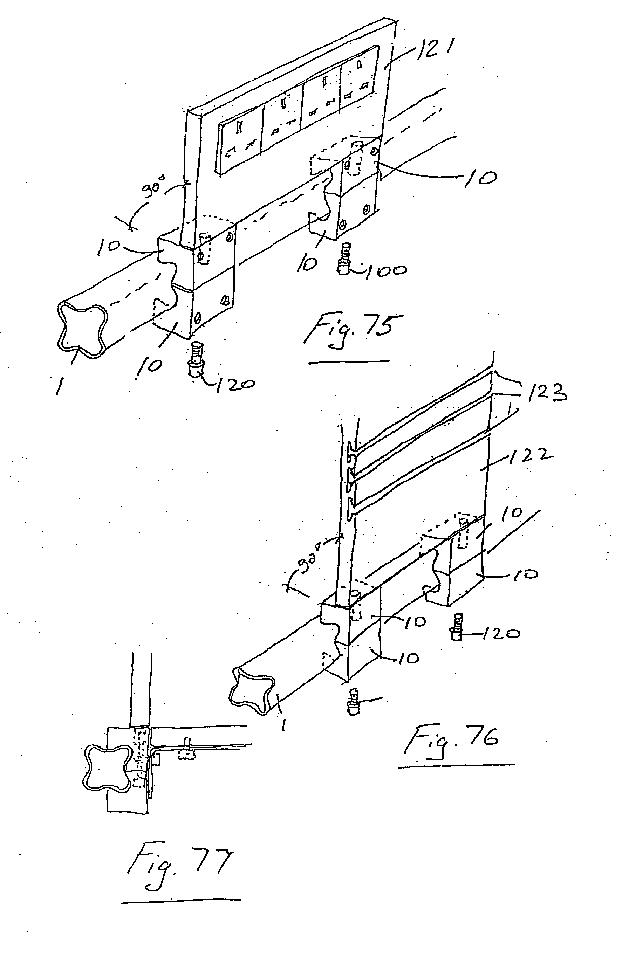

Vertical panel supporting systems are illustrated in Figs. 75 to 78. In this case two pairs of clamping elements 10 are longitudinally spaced-apart along a beam 1 and a panel is directly mounted to the clamping elements by fixing screws 120. In Fig. 75, the panel comprises a user power interface module 121. In Figs. 76 and 77, a panel 122 comprises grooves 122 which provide supports for articles such as paper trays and the like.

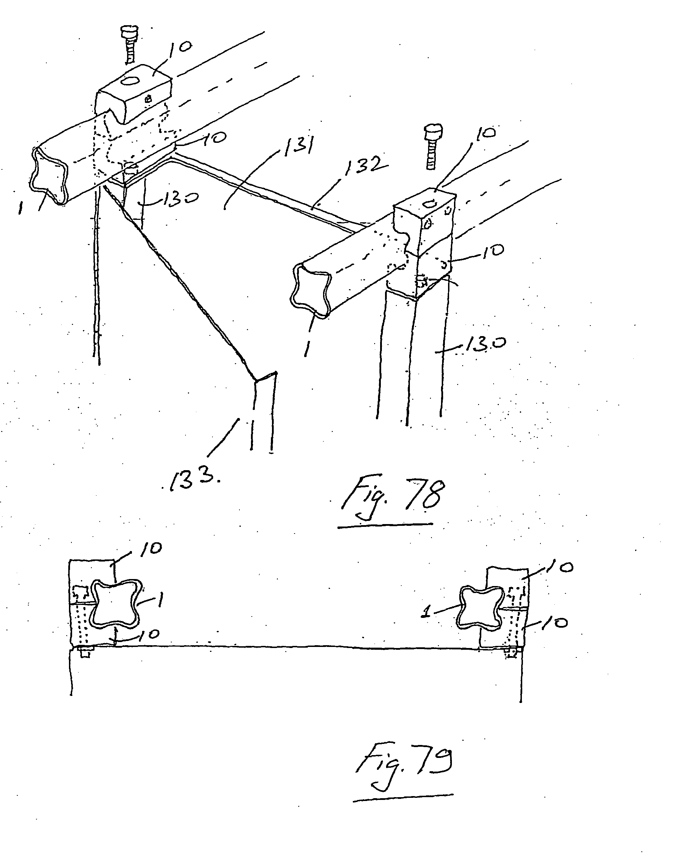

A cable riser track system is illustrated in Figs. 78 and 79. The cable track system comprises at least two spaced - apart support beams 1 and associated clamping elements 10. The clamping elements 10 are in this case mounted to uprights 130. The uprights 130 are spaced-apart to define a space 131 therebetween for reception of cables. The cable-receiving space is defined by an enclosure 132 which in this case has an access door 133.

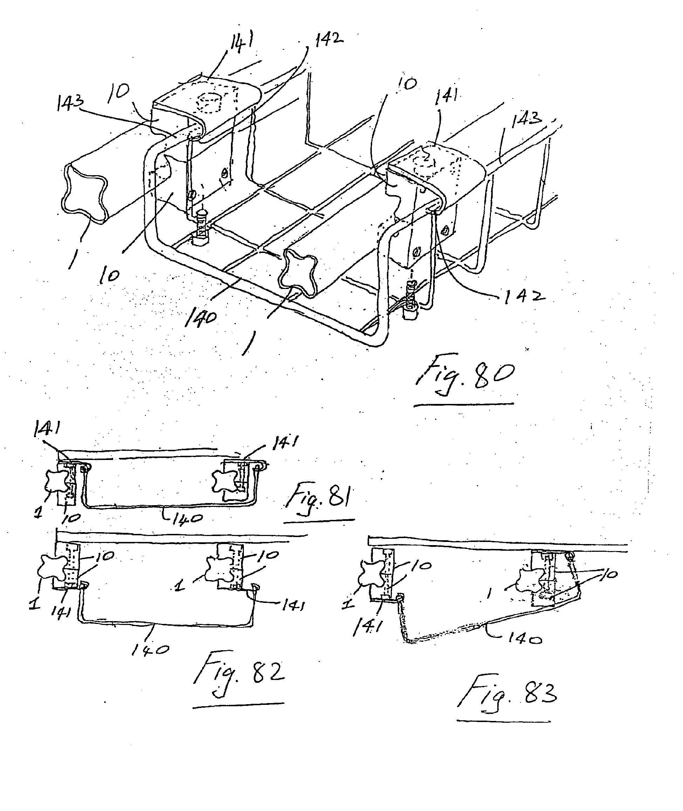

Referring now to Figs. 80 to 83 there is illustrated a cable track system comprising a pair of spaced-apart support beams 1 and associated clamping elements 10 and a cable track 140 mounted to the clamping elements 10. One of each pair of clamping elements 10 has a clip 141 with a downturned and inturned lip 142 which support mesh elements 143 of the cable track 140. The track 140 is of flexible mesh construction to facilitate ease of mounting and de-mounting of the track 140 to the clips 141 as illustrated particularly in Fig. 83.

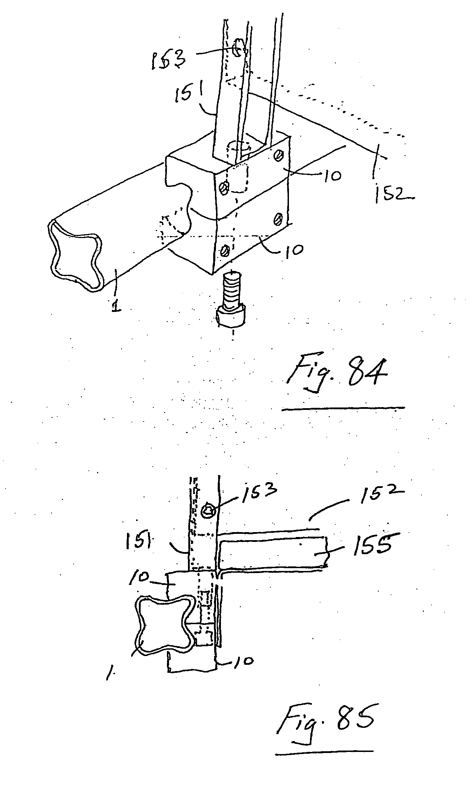

A divider screen support system is illustrated in Figs. 84 to 85. The divider screen support system comprises a pair of spaced - apart support beams 1 and associated clamping elements 10. Screen receivers in the form of channel sections 150 are mounted to opposed clamping elements 10 to receive a screen 151 therebetween. Holes 153 are provided in the channels 151 to clamp the screen 152 in a desired position. The screen 152 is raised to accommodate a worktop 155 or the like.

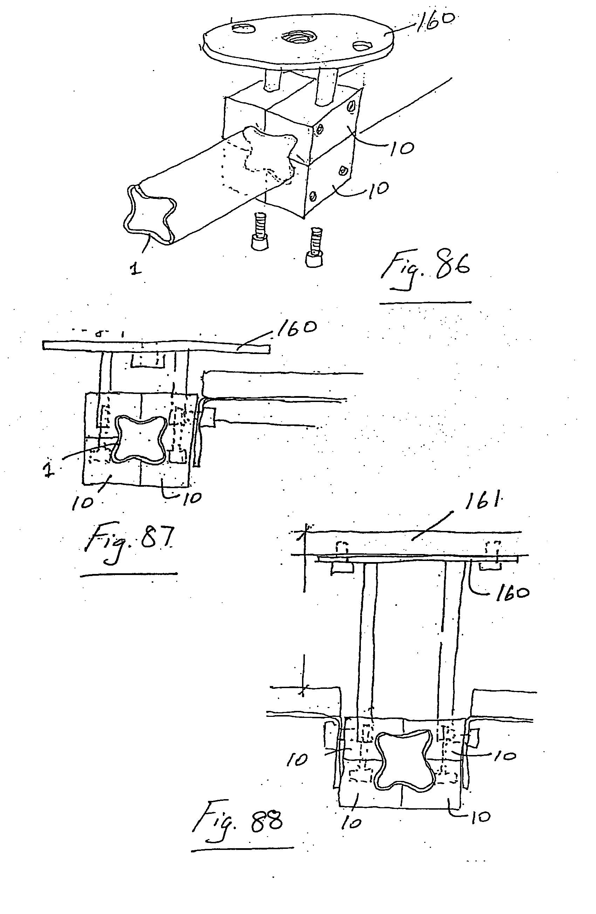

Referring to Figs. 86 to 88 there is illustrated an overdesk support system comprising a support beam 1 and associated clamping elements 10. An overdesk support 160 is mounted to the clamping elements 10. The support 160 may be used to mount a computer screen or TV monitor as illustrated in Figs. 86 and 87 or to provide a bracket to support an overdesk shelf 161 as shown in Fig. 88.

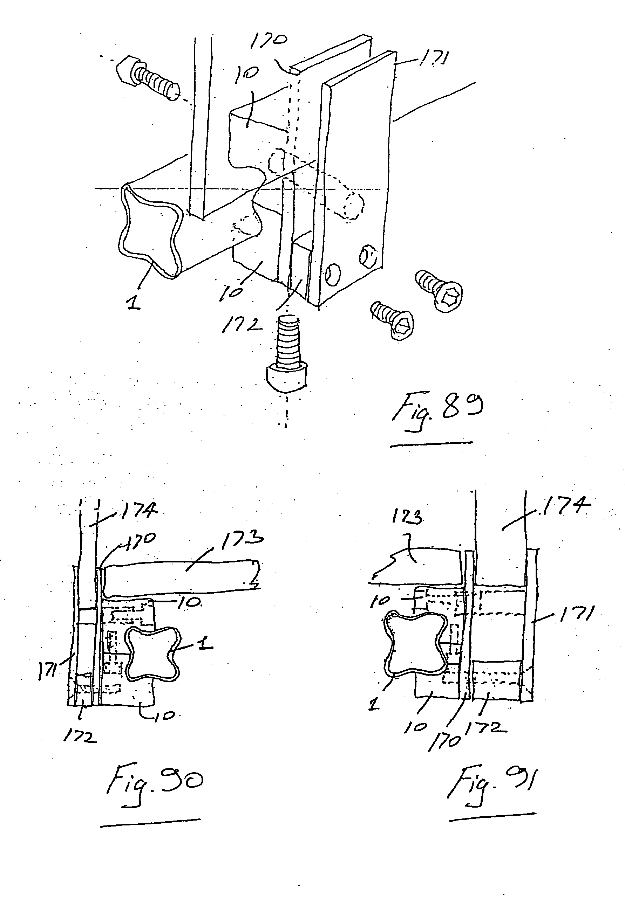

Figs. 89 to 91 illustrate a desk screen system in which an inner plate 170 is mounted to a clamping element 10 and an outer plate 171 is mounted to the inner plate 170, a space therebetween being controlled by a suitable spacer 172. A panel screen 174 is located between the plates 170, 171. A desktop 173 is also supported by the clamping elements 10.

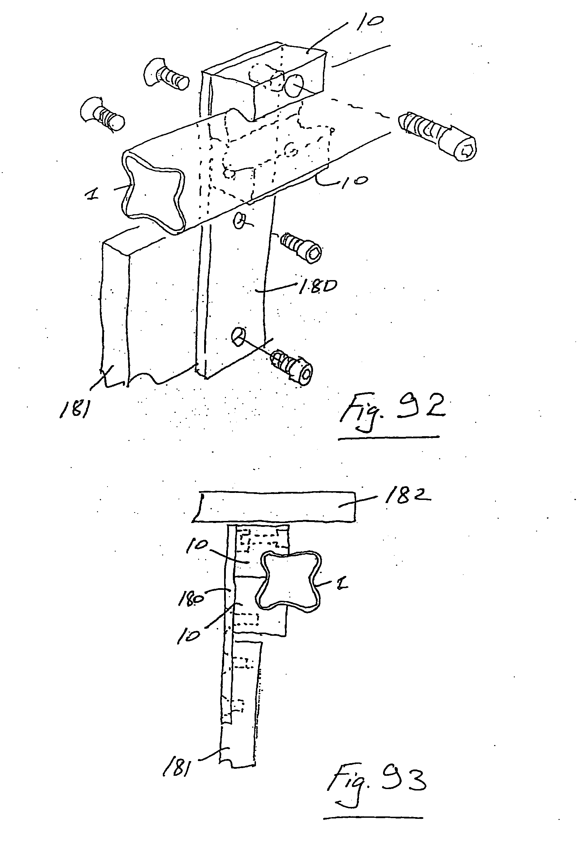

A modesty panel system is illustrated in Figs. 92 and 93 in which clamping elements have a mounting plate 180 to which a modesty panel 181 is mounted. Again, a worktop 182 may be supported by the clamping elements 10.

The invention is not limited to the embodiments hereinbefore described which may be varied in construction and detail.

## Claims

1. A modular furniture system comprising:-
a support beam having a plurality of projecting lobes; and
a clamp for mounting to the support beam, the clamp comprising at least one clamping element;
the clamping element comprising a single piece having a recess of complementary shape to that of the lobe, the clamping element recess fully embracing the lobe for mounting the clamp to the beam.

2. A system as claimed in claim 1 wherein the clamp comprises at least two clamping elements, the clamping elements being engagable with separate lobes of the support beam.

3. A system as claimed in claim 2 wherein the clamp comprises two clamping elements.

4. A system as claimed in claim 2 wherein the clamp comprises three clamping elements.

5. A system as claimed in claim 2 wherein the clamp comprises four clamping elements.

6. A system as claimed in any of claims 2 to 5 comprising fixing means for fixing the clamp elements together.

7. A system as claimed in claim 6 wherein the fixing means extends between adjacent clamp elements.

8. A system as claimed in any of claims 1 to 7 comprising an end insert for the support beam, the insert may comprise a support for mounting another element to the insert, the insert may comprise a pair of insert parts which are adjustably mounted or mountable to one another.

9. A system as claimed in claim 8 wherein the insert comprises a clamp for mounting to another support beam, the insert may comprise a linking element for joining adjacent support beams.

10. A system as claimed in any of claims 1 to 9 comprising a support for a horizontal worktop or tabletop, the support comprising at least two spaced apart support beams and associated clamps.

11. A system as claimed in any of claims 1 to 9 comprising a vertical panel system comprising a support beam and at least two separate clamps which are longitudinally spaced-apart along the support beam, and a panel mounted to the spaced-apart clamps.

12. A system as claimed in any of claims 1 to 9 comprising a cable riser track system, the cable riser track system comprising at least two spaced-apart support beams and associated clamps, the clamps being mounted to uprights, the uprights defining therebetween a space for reception of cables.

13. A system as claimed in any of claims 1 to 9 comprising a cable track system, the cable track system comprising at least two spaced-apart support beams and associated clamps, and a cable track mounted to the clamps.

14. A system as claimed in any of claims 1 to 9 comprising a divider screen support system, the screen support system comprising at least two spaced - apart support beams and associated clamps, screen receivers being mounted to the spaced-apart clamps to receive a screen therebetween.

15. A system as claimed in any of claims 1 to 9 comprising an overdesk support system, the overdesk support system comprising a support beam and associated clamps, and an overdesk support mounted to the clamps.
